(19) Europäisches Patentamt
European Patent Office
Office européen des brevets

(11) Numéro de publication : **0 201 371**
**B1**

# (12) FASCICULE DE BREVET EUROPÉEN

(45) Date de publication du fascicule du brevet : **30.08.89**

(51) Int. Cl.[4] : **C 08 F 8/42**, C 08 C 19/00, H 01 B 1/12

(21) Numéro de dépôt : **86400671.3**

(22) Date de dépôt : **27.03.86**

## (54) Procédé de préparation de polymères ou prépolymères conducteurs à partir d'un polymère à insaturations éthyléniques et d'un composé silanique.

(30) Priorité : **05.04.85 FR 8505219**

(43) Date de publication de la demande : **12.11.86 Bulletin 86/46**

(45) Mention de la délivrance du brevet : **30.08.89 Bulletin 89/35**

(84) Etats contractants désignés : **DE FR GB IT NL SE**

(56) Documents cités :
EP-A- 0 100 036
FR-A- 1 497 253
FR-A- 2 401 176

(73) Titulaire : **SOCIETE NATIONALE DES POUDRES ET EXPLOSIFS**
**12, quai Henri IV**
**F-75181 Paris Cédex 04 (FR)**

(72) Inventeur : **Fontanille, Michel**
**71, rue de Ségur**
**F-33000 Bordeaux (FR)**
Inventeur : **Krantz, Nicolas**
**14 rue Gambetta**
**F-27300 Bernay (FR)**
Inventeur : **Gautier, Jean-Claude**
**1 rue Brossolette**
**F-94480 Ablon sur Seine (FR)**
Inventeur : **Raynal, Serge**
**Orée de Sénart Bâtiment Hérédia**
**F-91210 Draveil (FR)**

**EP 0 201 371 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé de préparation de polymères ou prépolymères conducteurs du courant électrique, et des polymères ou prépolymères conducteurs.

Pour plus de clarté dans le texte, on utilisera uniquement le terme « polymères » pour désigner indifféremment les prépolymères, qui conduisent après polymérisation à des polymères ou les polymères eux-mêmes.

On entend par l'expression « polymères conducteurs », des polymères possédant une conductivité électrique ou résistivité suffisante pour permettre l'écoulement des charges électrostatiques, par courant de fuite, et éviter l'accumulation de ces charges dans le matériau, accumulation qui peut par décharge brutale générer une étincelle, comme dans un condensateur. Ainsi, la résistivité volumique des polymères conducteurs de l'invention est de l'ordre de $10^8$ à $10^{10}$ Ωm, alors que celle d'un polymère isolant est de $10^{13}$ à $10^{15}$ Ωm, tandis que celle d'un matériau conducteur tel qu'un métal est de l'ordre de $10^2$ à $10^3$ Ωm.

Les polymères isolants électriques ne peuvent être utilisés sans précaution pour réaliser des objets, des revêtements qui doivent être mis en contact ou entreposés en présence de produits inflammables ou explosibles, compte tenu du risque de génération d'étincelles dues à la décharge des charges électrostatiques accumulées par ces matériaux.

Les polymères conducteurs peuvent quant à eux être utilisés sans inconvénients dans les circonstances décrites ci-dessus.

On sait rendre conducteurs des polymères, notamment en les chargeant avec des matériaux conducteurs, comme des poudres métalliques, de graphite ou des fibres de carbone ou métalliques.

Toutefois, pour obtenir un degré de conductivité suffisant, il est nécessaire d'additionner un taux élevé de charges, ce qui entraîne une modification des propriétés mécaniques du polymère, et même de sa résistance aux agressions d'ordre chimique. Ainsi, le domaine d'utilisation de ces matériaux chargés se trouve limité.

La demanderesse propose un procédé permettant de rendre conducteur un polymère, par addition chimique de groupements comportant des atomes porteurs d'électrons mobiles, tels que par exemple l'atome d'oxygène dans la fonction éther. Ce greffage chimique permet de conserver sensiblement les propriétés mécaniques et de résistance aux agressions chimiques inhérentes au polymère de départ.

L'addition de ces groupements proposée par l'invention est obtenue par une réaction d'hydrosilylation entre le groupement conducteur portant au moins une fonction Si-H, et les liaisons éthyléniques du polymère.

On connaît des polymères tels que des polydiènes, sur lesquels sont additionnés plusieurs groupements contenant des fonctions éthers, notamment ceux décrits dans le brevet français nº 1 497 253. Ainsi, le procédé décrit dans ce brevet consiste à additionner, dans une première étape, des groupements siloxanes sur les liaisons éthyléniques du polymère, puis dans une seconde étape, substituer les groupements alkoxy des siloxanes par des groupements polyéthérés. Cette dernière substitution est réalisée en présence d'un acide fort, cet acide pouvant réagir avec d'autres fonctions du polymère, notamment quand celui-ci possède des fonctions terminales, telles que des fonctions hydroxyles. Donc, ce procédé ne permet pas d'additionner des groupements polyéthérés sur des polymères contenant en plus des liaisons éthyléniques, d'autres fonctions nécessaires pour la réticulation ou polymérisation du produit final, comme par exemple les polymères comportant des fonctions terminales hydroxyles ou carboxyles tels que le polybutadiène hydroxytéléchélique (PBHT) ou le polybutadiène carboxytéléchélique (PBCT).

La présente invention a pour but notamment de permettre l'addition de groupements polyéthérés sur un polymère contenant des liaisons éthyléniques, sans modifier sensiblement les propriétés mécaniques du polymère et sans affecter les fonctions autres que les fonctions éthyléniques en proposant un procédé de fabrication de ces polymères par addition des groupements polyéthérés par une réaction d'hydrosilylation.

A cet effet, l'invention a pour objet un procédé de fabrication d'un polymère conducteur du courant électrique à partir d'un polymère comportant des insaturations éthyléniques comprenant les étapes suivantes :

a) faire réagir en présence d'un catalyseur d'hydrosilylation, le polymère comportant des insaturations éthyléniques, avec un composé silane de formule générale suivante :

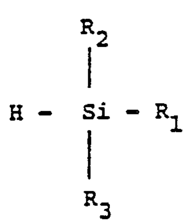

(I)

dans laquelle

— $R_1$ représente un groupement hydrocarboné comportant au moins un hétéroatome porteur d'électrons mobiles,

— $R_2$, $R_3$ qui peuvent être identiques ou différents, représentent un reste aliphatique substitué ou non, un reste organique substitué ou non, ou un groupement $R_1$

b) faire précipiter le polymère résultant, par addition dans le milieu réactionnel, d'un composé ou mélange de composés dans lesquels le polymère est insoluble, et

c) séparer le polymère précipité du milieu réactionnel par, par exemple, décantation, filtration, centrifugation ou par tout procédé adéquate de séparation.

Selon une autre caractéristique de l'invention, le groupement $R_1$ comprend un reste polyéthéré, de formule générale :

$$-R_4-(O-R_5)_n-O-R_6 \quad (II)$$

dans laquelle

$R_4$, $R_5$, $R_6$ représentent des restes aliphatiques substitués ou non comportant de 1 à 4 atomes de carbone

n est un nombre entier compris entre 1 et 20.

Les groupements préférés de l'invention sont les groupements poly-oxyéthylènes de formule :

$$R_6-O-(CH_2-CH_2-O)_n-(CH_2)_m- \quad (III)$$

dans laquelle : m est égal à 1, 2 ou 3, et n est compris entre 1 et 20.

$R_6$ est le groupement méthyl, éthyl ou propyl.

Pour plus de clarté, on appellera groupement éther-silane, les groupements de formule générale I, étant donné que le substituant $R_1$ préféré est un groupement comprenant des fonctions éthers.

Selon une autre caractéristique de l'invention, au moins certaines des insaturations éthyléniques contenues dans le polymère sont de type vinylique, les groupements conducteurs étant additionnés, de préférence, sur au moins une partie de ces insaturations de type vinylique.

Avantageusement, les insaturations de type vinylique sont portées par les atomes de carbone constituant la chaîne du polymère, les atomes de carbone terminaux portant de préférence des groupes fonctionnels différents tels que des groupes hydroxyles ou carboxyles, par exemple.

Ainsi, les groupements éther-silanes sont additionnés uniquement sur les insaturations de type vinylique pendantes et ne réagissent pas avec les groupes fonctionnels terminaux du polymère. De ce fait, le polymère obtenu pourra toujours être polymérisé ou réticulé au moyen des groupes fonctionnels terminaux ainsi que des insaturations éthyléniques non saturées par les groupements éther-silanes.

Les groupements éther-silanes peuvent être additionnés sur la totalité des insaturations de type vinylique contenues dans le polymère. En outre, il est possible, sans modifier les groupes fonctionnels terminaux d'additionner les groupements éther-silanes sur au plus 10 % des insaturations éthyléniques contenues dans la chaîne du polymère (insaturations de type 1-4).

Les polymères convenables pour l'invention sont les polymères contenant des insaturations éthyléniques de type vinylique pendantes ou terminales et/ou des insaturations éthyléniques dans la chaîne. Les polymères peuvent également comprendre d'autres fonctions, telles que des fonctions hydroxyles, carboxyles, par exemple, ces fonctions étant avantageusement terminales. On peut citer à titre d'exemple de polymères convenables pour l'invention, les polymères obtenus par polymérisation ou copolymérisation des composés diéniques tels que les polybutadiènes, polyisoprènes, par exemple, ou les polybutadiènes insaturés obtenus par condensation.

Les polymères préférés de l'invention sont les polymères contenant des insaturations éthyléniques dont au moins certaines sont de type vinylique. Ces polymères sont obtenus par polymérisation ou copolymérisation de composés diéniques, tels que les polybutadiènes à polymérisation 1-2 et 1-4, les polyisoprènes à polymérisation 1-2, 3-4 et 1-4.

Les polymères préférés de l'invention sont les polybutadiènes hydroxytéléchéliques ou carboxytéléchéliques contenant des insaturations de type vinylique.

Comme polymères convenables pour l'invention, on peut utiliser des polymères contenant des groupements silyles ferrocènes déjà additionnés sur une partie des doubles liaisons de type vinylique, les groupements éther-silane étant additionnés sur les autres doubles liaisons de type vinylique présentes dans le polymère.

Ces polymères sont notamment décrits dans la demande de brevet FR-A-256 789.

Les catalyseurs d'hydrosilylation convenables pour l'invention sont les peroxydes, le platine, l'acide hexachloroplatinique ($H_2PtCl_6$, $_6H_2O$), les métaux carbonyles tels que le cobalt carbonyle, le nickel-carbonyle et analogues. Le catalyseur préféré de l'invention est l'acide hexachloroplatinique.

Les composés ou mélanges de composés convenables pour précipiter le polymère produit par la réaction de la première étape sont le méthanol, l'éthanol, l'acétone, un mélange acétone-éthanol ou tout autre composé ou mélange ne dissolvant pas le polymère transformé.

La réaction d'hydrosilylation (étape a) peut être conduite en milieu hétérogène et sans solvant, ou en milieu homogène par addition aux produits de départ d'un solvant ou mélange de solvants commun au polymère et au groupement éther-silane.

Les solvants préférés de l'invention sont le tétrahydrofuranne, le benzène, le toluène, l'hexane, le tétrachlorure de carbone.

La réaction d'hydrosilylation est réalisée de préférence à température ambiante. Toutefois, elle peut être conduite à une température inférieure ou légèrement supérieure selon le taux désiré de transformation des liaisons éthyléniques. Ainsi, si l'on désire additionner des groupements éther-silanes également sur les liaisons éthyléniques de type non vinylique, il est préférable de conduire la réaction à une température supérieure à la température ambiante.

La quantité de groupements éther-silanes de formule générale (I) mise en œuvre correspond à la quantité stœchiométrique nécessaire pour transformer le nombre désiré de liaisons éthyléniques. Avantageusement, on ajoute un excès, d'environ 10 % de groupements éther-silanes par rapport à cette quantité stœchiométrique.

Toutefois, le rendement de la réaction d'hydrosilylation peut ne pas être égal à 100 % comme le montrent les exemples.

Les conditions énumérées ci-dessus correspondent au mode de réalisation permettant d'additionner les groupements éther-silanes sur les liaisons éthyléniques de type vinylique, et de ne pas affecter les autres fonctions portées par le polymère ou de ne pas provoquer une réticulation ou un pontage qui augmenterait le poids moléculaire du polymère et sa viscosité.

Toutefois, si on le désire, le procédé de l'invention permet d'additionner des groupements éther-silanes sur les liaisons éthyléniques contenues dans la chaîne du polymère, en conduisant la réaction à des températures plus élevées ou en choisissant un catalyseur convenable et une concentration appropriée de celui-ci dans le milieu réactionnel.

Les groupements de formule I, et notamment ceux contenant des groupements $R_1$ de formule II ou III sont obtenus par des procédés connus.

A titre d'illustration, les groupements éther-silanes comprenant un radical $R_1$ de formule III sont obtenus à partir des polyoxyéthylènes monohydroxylés disponibles commercialement et notamment vendus par la Société Aldrich, et ayant comme formule :

$$CH_3—CH_2—(O—CH_2—CH_2)_n—OH$$

Un premier procédé consiste à former un alcoolate de sodium par dissolution de sodium métallique dans le polyoxyéthylène alcool, puis à faire réagir cet alcoolate avec un halogénure d'allyle par exemple un chlorure, pour obtenir le composé suivant :

$$CH_3—CH_2—(O—CH_2—CH_2)_n—CH_2—CH{=}CH_2$$

Après extraction de ce composé par un solvant organique, on le fait réagir sur un chlorosilane de formule générale :

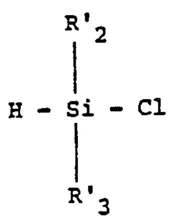

dans laquelle $R_2'$ et $R_3'$ ont la signification de $R_2$ et $R_3$ dans la formule I. Toutefois quand $R_2$ et $R_3$ sont identiques à $R_1$, $R_2'$ et $R_3'$ représentent l'hydrogène.

La réaction est conduite en présence d'un catalyseur d'hydrosilylation tel que l'acide hexachloroplatinique. Le chlorosilane obtenu est réduit en présence d'un catalyseur de réduction tel que $LiAlH_4$, $AlCl_3$ en milieu anhydre.

On obtient alors le composé de formule générale I, avec un groupement $R_1$ de formule III, à savoir :

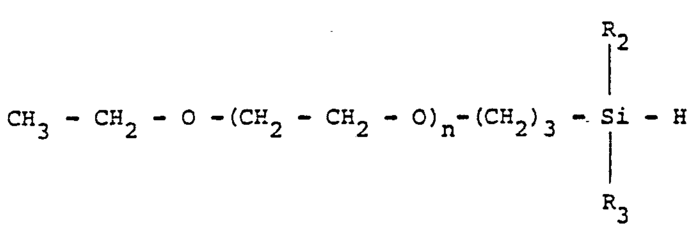

Dans un second procédé, on mélange le polyoxyéthylène monohydroxylé avec l'halogénure d'allyle en présence de soude et d'un catalyseur tel que le tétrabutylammonium hydrogénosulfate (TBAH), par exemple. Ces catalyseurs sont employés usuellement pour réaliser des réactions par transfert de phase. On obtient ainsi le composé suivant :

$$CH_3—CH_2—(O—CH_2—CH_2)_n—CH_2—CH = CH_2$$

l'obtention du composé silylé de formule générale I est ensuite réalisée selon le même processus que dans le procédé précédent.

Enfin, il est possible d'obtenir le polyoxyéthylène monohydroxylé directement par polymérisation de l'oxyde d'éthylène

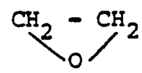

Bien entendu, il est possible, sans pour cela sortir du cadre de l'invention, d'utiliser d'autres procédés pour obtenir les composés de formule générale I, par exemple à partir de composés différents des polyoxyéthylènes monohydroxylés.

L'invention sera mieux illustrée par les exemples suivants, donnés uniquement à titre indicatif.

## Exemple 1

Préparation de l'éthyl, (propyl-3 di méthyl)silane éther de l'éthylène glycol

On dissout le maximum de sodium métallique dans une quantité déterminée de monoéthyl éther d'éthylèneglycol, en maintenant le milieu réactionnel à reflux.

Après avoir maintenu le chauffage pendant environ 4 h, on ajoute lentement et à froid, une quantité stœchiométrique de chlorure d'allyle. Cette réaction est très exothermique et on observe la précipitation du chlorure de sodium.

On dissout le chlorure de sodium dans de l'eau, puis on ajoute un solvant organique tel que l'hexane pour extraire l'éthylallyl éther d'éthylène glycol.

La phase organique ainsi récupérée est lavée avec de l'eau puis séchée par exemple sur un lit de $MgSO_4$.

Le solvant est ensuite évaporé, pour récupérer l'éthylallyl éther d'éthylène glycol. On obtient un rendement pondéral de 72 %.

Le produit obtenu a été caractérisé par analyse infrarouge et RMN.

On additionne ensuite un groupement silane sur la double liaison du radical allyle, par une réaction d'hydrosilylation. Celle-ci est réalisée en dissolvant le catalyseur (l'acide hexachloroplatinique ACP) dans le diméthylchlorosilane (1 g de ACP dans 800 g de diméthylchlorosilane). Cette solution est ensuite portée à reflux, et l'éthyl allyl éther d'éthylène glycol mis en solution dans l'hexane est coulé dans celle-ci.

L'acide hexachloroplatinique peut également être dissous dans un alcool, tel que l'isopropanol, la solution alcoolique ainsi obtenue étant utilisée de manière identique à la solution au diméthylchlorosilane.

Le produit est récupéré par évaporation du solvant et distillation. Le rendement obtenu est de 64 %.

Le chlorosilane ainsi isolé est ensuite réduit par coulée de celui-ci dans une suspension de $AlCl_3—LiAlH_4$ dans des solvants éthérés anhydres. Après réaction pendant 3 h, sous reflux d'éther, l'excès du complexe $AlCl_3—LiAlH_4$ est détruit par addition d'éther éthylique saturé en eau, la phase organique étant extraite à l'éther puis séchée sur $MgSO_4$. On peut également réaliser cette réduction en utilisant le trétrahydrofurane comme solvant.

Après distillation, on récupère un produit incolore, ayant comme température d'ébullition sous 15 mm de Hg : 87 °C. Le rendement de la réaction de réduction est de 95 %.

Le spectre infrarouge de ce composé montre une bande à 2 100 $cm^{-1}$ correspondant à la liaison Si—H. L'analyse RMN confirme qu'il s'agit bien du composé

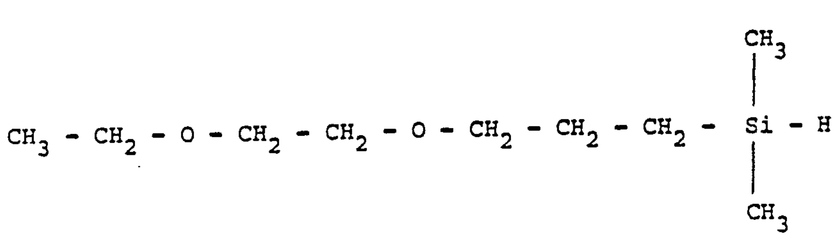

l'éthyl, (diméthylpropyl-3)silane éther d'éthylène glycol.

Modification d'un polybutadiène hydroxytéléchélique

Le polybutadiène hydroxytéléchélique contient deux types de liaisons éthyléniques, d'une part des doubles liaisons entre des atomes de carbone de la chaîne du polymère provenant d'une polymérisation 1-4 et des doubles liaisons de type vinylique pendantes dues à la polymérisation 1-2. Les conditions opératoires décrites ci-dessous permettent une addition préférentielle de l'éthyl, (diméthylpropyl-3) silane éther d'éthylène glycol sur les doubles liaisons de type vinylique.

Le polybutadiene hydroxytéléchélique utilisé dans les exemples est le polymère commercialisé par la Société ARCO sous les dénominations commerciales R 45 M ou R 45 HT.

Le polybutadiène et le silane éther d'éthylène glycol sont mélangés intimement, puis le catalyseur, l'acide hexachloroplatinique pur ou dissous dans de l'isopropanol, est ajouté au mélange, de manière fractionnée.

On laisse réagir à température ambiante pendant 24 h. La concentration d'acide hexachloroplatinique obtenue en fin d'addition est de $2\text{-}10^{-3}$ moles/litre de solution finale.

Le polymère ainsi obtenu est ensuite dissous dans de l'hexane et précipité dans un mélange méthanol-acétone. Le polymère est alors isolé et les dernières traces de solvant sont éliminées par évaporation sous pression réduite.

Le pourcentage d'addition obtenu correspond à environ 70 % du pourcentage désiré correspondant à la quantité d'éther d'éthylène glycol ajoutée.

Exemple 2

Préparation du méthyl, (diméthylpropyl-3)silane éther de triéthylène glycol

L'alcool $CH_3{-}O{-}(CH_2{-}CH_2{-}O){-}CH_2{-}CH_2{-}OH$ qui a une viscosité assez élevée est mélangée avec du chlorure d'allyle, en large excès, et en présence de tétrabutylammonium hydrogénosulfate (TBAH) et d'une solution de soude à 50 % en poids.

L'ensemble est maintenu sous agitation vigoureuse, à 40 °C pendant 4 h.

Après la fin de la réaction, on additionne de l'eau pour dissoudre le chlorure de sodium ajouté, et du dichlorométhane pour extraire la phase organique.

La phase organique ainsi obtenue est distillée à 91 °C sous 3 mm de Hg. Le rendement pondéral de la réaction est de 95 %.

L'addition d'un diméthylchlorosilane sur la double liaison du groupe allyle et la réduction du chlorosilane sont conduites comme dans l'exemple 1.

Modification d'un polybutadiène hydroxytéléchélique

L'addition du méthyl, (diméthylpropyl-3)silane éther de triéthylène glycol sur un polybutadiène hydroxytéléchélique est réalisée selon le mode opératoire décrit dans l'exemple 1.

On obtient également un taux d'addition correspondant à 70 % du taux théorique recherché.

Exemples 3 à 6

Par la méthode décrite à l'exemple 2, on a synthétisé les produits de formule suivante :

$$CH_3 - (O - CH_2 - CH_2)_n - O - (CH_2)_3 - \underset{\displaystyle CH_3}{\overset{\displaystyle CH_3}{Si}} - H$$

avec n égal à 3, 6, 11, 15.

Ces composés ont été additionnés sur un polybutadiène hydroxytéléchélique, selon un mode opératoire identique à celui décrit dans l'exemple 1. Les taux d'addition obtenus sont comparables à ceux obtenus dans les exemples 1 et 2.

Le polybutadiène hydroxytéléchélique utilisé a une fonctionalité en OH égale à environ 2,4. Une mesure de sa fonctionalité après addition des groupements éthers-silanes, montre que celle-ci n'a pas été modifiée.

Les caractéristiques de conductivité électrique des différents polymères obtenus ont été déterminées par la méthode normalisée, en France, qui consiste brièvement à déposer des contacts d'argent sur la surface du polymère, ces contacts étant espacés d'une distance déterminée, et de mesurer d'une part la résistivité surfacique (ρs) entre deux contacts argent déposés sur la même face de la plaque en

polymère, et d'autre part la résistivité volumique (ρv) entre deux contacts déposés sur les faces opposées de la plaque en polymère, à une tension déterminée qui dans le cas présent est égal à 500 V.

Par ailleurs, la température de transition vitreuse de ces polymères a également été déterminée, cette caractéristique permettant d'évaluer les possibilités d'utilisation du polymère.

Ces différents résultats sont réunis dans le tableau ci-dessous :

| Ex | éther-silane $R_6-O-(CH_2-CH_2-O)_n-(CH_2)_3-Si(CH_3)_2-H$ | température de transition vitreuse | ρv Ω m | ρs Ω |
|---|---|---|---|---|
| 0 (1) | - | − 82°C | $3,8x10^{13}$ | $4,5x10^{15}$ |
| 1 | $R_6 = CH_3 - CH_2$<br>n = 1 | − 83°C | $1,2x10^{12}$ | $6,9x10^{14}$ |
| 2 | $R_6 = CH_3$<br>n = 2 | − 83°C | $1,1x10^{11}$ | $3,9x10^{13}$ |
| 3 | $R = CH_3$<br>n = 3 | − 84°C | $1,4x10^{9}$ | $7 x 10^{11}$ |
| 4 | $R_6 = CH_3$<br>n = 6 | − 82°C | $1,3x10^{8}$ | $3,1x10^{11}$ |
| 5 | $R_6 = CH_3$<br>n = 11 | − 80°C | $1,5x10^{8}$ | $5,3x10^{10}$ |
| 6 (2) | $R_6 = CH_3$<br>n = 15 | − 80°C | $2,7x10^{8}$ | $3,8x10^{10}$ |

(1) l'essai 0 correspond aux mesures effectuées sur le polymère PBHT avant l'addition de groupements éther-silanes

(2) 1 % des doubles liaisons 1-2 et 1-4 ont été modifiées.

Ce tableau montre le gain important obtenu sur la résistivité surfacique et volumique, qui est égal à un facteur $10^5$ environ, notamment quand le groupement additionné comprend plus de 4 fonctions éthers, c'est-à-dire pour les silanes éthers de triéthylène glycol ou tétraéthylèneglycol.

Toutefois, l'addition de groupements contenant un nombre élevé de fonction éther, par exemple 12 ou 16, ne permet pas d'obtenir un gain sensible sur la résistivité par rapport au gain obtenu avec les groupements contenant de 4 à 10 fonctions éther.

Un autre point remarquable que fait apparaître ces essais, réside dans le fait que la température de transition vitreuse du polymère modifié est sensiblement égale à celle du polymère non modifié.

Ainsi, un polybutadiène hydroxytéléchélique contenant 3 % de groupements silylferrocéniques, décrit dans la demande de brevet européen nº 85401317.4 a été modifié selon le procédé de l'invention pour greffer 17 % de groupements éther-silane contenant 4 fonctions éthers. La température de transition vitreuse du polymère ainsi obtenu est de — 81 °C tandis que celle du PBHT avec 3 % de groupements silylferrocéniques est de — 65 °C.

D'autres essais et mesures ont montré qu'une addition sur 10 % environ des liaisons éthyléniques du polymère permet d'atteindre le gain maximum sur la résistivité, un taux d'addition plus élevé permet seulement d'abaisser la résistivité d'un facteur inférieur à 10.

Par ailleurs, l'addition de groupements contenant un nombre important de fonction éther peut conduire à des phénomènes de démixtion.

Pour ces raisons, les groupements préférés de l'invention sont ceux qui contiennent de 3 à 10 fonctions éthers.

Les polymères de l'invention qui présentent une résistivité suffisamment faible pour éviter l'accumulation des charges électrostatiques, permettent donc la réalisation d'objets, de revêtements utilisables même en présence de produits inflammables ou explosibles, et donc l'invention a permis

d'élargir le champ d'application et d'utilisation de ces polymères.

Ainsi, ces polymères peuvent être utilisés comme liant pour la fabrication de revêtement protecteur de dispositifs tels que cuves de stockage par exemple, ou pour la fabrication par moulage d'objets et dispositifs utilisés en présence ou en contact avec des produits inflammables ou explosibles.

Comme la résistivité des polymères de l'invention est de l'ordre de grandeur de celle des matériaux utilisés pour fabriquer des composants électroniques, il devient possible de réaliser ceux-ci avec les polymères de l'invention ce qui permet une réduction des coûts et une plus grande facilité de mise en œuvre.

Enfin, ces polymères sont utilisables comme liant et peuvent être chargés avec tous types de matériaux.

**Revendications**

1. Procédé de fabrication d'un polymère conducteur du courant électrique à partir d'un polymère contenant des insaturations éthyléniques, caractérisé en ce qu'il comprend les étapes suivantes :

a) faire réagir en présence d'un catalyseur d'hydrosilylation, le polymère comportant des insaturations éthyléniques, avec un composé silane de formule générale suivante :

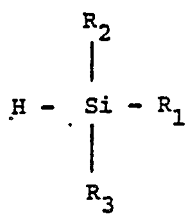

(I)

dans laquelle

$R_1$ représente un groupement hydrocarboné comportant au moins un hétéroatome porteur d'électrons mobiles,

$R_2$, $R_3$ qui peuvent être identiques ou différents, représentent un reste aliphatique substitué ou non, un reste organique substitué ou non ou un groupement $R_1$ ;

b) faire précipiter le polymère résultant, par addition dans le milieu réactionnel, d'un composé ou mélange de composés dans lesquels ledit polymère est insoluble, et

c) séparer le polymère précipité du milieu réactionnel.

2. Procédé selon la revendication 1, caractérisé en ce que le groupement $R_1$ est un reste polyéthéré de formule générale :

$$—R_4—(O—R_5)_n—O—R_6 \qquad (II)$$

dans laquelle

$R_4$, $R_5$, $R_6$ représentent des restes aliphatiques substitués ou non comportant de 1 à 4 atomes de carbone

n est un nombre entier compris entre 1 et 20.

3. Procédé selon la revendication 2, caractérisé en ce que le groupement $R_1$ précité est un radical alkyl éther polyéthylèneglycol de formule suivante :

$$R_6—O—(CH_2—CH_2—O)_n—(CH_2)_m— \qquad (III)$$

dans laquelle :

$R_6$ représente un radical méthyl, éthyl, propyl

m est un nombre entier égal à 1, 2 ou 3

n est un nombre entier compris entre 1 et 20.

4. Procédé selon l'une des revendications précédentes, caractérisé en ce que au moins certaines des insaturations éthyléniques précitées du polymère sont des insaturations de type vinylique, les groupements éther-silanes de formule générale (I) étant additionnés sur au moins une partie desdites insaturations de type vinylique.

5. Procédé selon la revendication 4, caractérisé en ce que les insaturations de type vinylique précitées sont portées par les atomes de carbone constituant la chaîne du polymère, les atomes de carbones terminaux portant des groupes fonctionnels différents.

6. Procédé selon la revendication 5, caractérisé en ce que le polymère précité est un polybutadiène comportant au moins des insaturations de type vinylique, et des groupes fonctionnels terminaux choisis dans le groupe comportant les groupes hydroxyles et carboxyles.

7. Procédé selon l'une des revendications précédentes, caractérisé en ce que les groupements éther-silanes précités sont additionnés sur la totalité des insaturations de type vinylique contenues dans le polymère.

8. Procédé selon l'une des revendications 1 à 6, caractérisé en ce que les groupements éther-silanes précités sont additionnés sur au plus 10 % des liaisons éthyléniques présentes dans la chaîne du polymère.

9. Procédé selon l'une des revendications précédentes, caractérisé en ce qu'il consiste à ajouter un solvant commun au polymère et au composé éther-silane précité pour réaliser l'étape a précitée d'hydrosilylation.

10. Procédé selon la revendication 9, caractérisé en ce que le solvant commun précité est choisi dans le groupe comprenant le tétrahydrofuranne, le benzène, le toluène, l'hexane, le tétrachlorure de carbone.

11. Procédé selon l'une des revendications 1 à 8, caractérisé en ce que l'étape a précitée est réalisée en milieu hétérogène.

12. Procédé selon l'une des revendications précédentes, caractérisé en ce que le nombre de moles de composé éther-silane ajouté par mole de polymère est égal au nombre d'insaturations de type vinylique contenues dans une mole de polymère sur lesquelles on désire additionner ledit composé éther-silane, augmenté d'un excès de 10 % environ.

13. Procédé selon l'une des revendications précédentes, caractérisé en ce que le composé non solvant précité utilisé dans l'étape b est choisi dans le groupe comprenant le méthanol, l'éthanol, l'acétone, un mélange acétone-méthanol.

**Claims**

1. Process for the manufacture of a polymer which conducts an electrical current from a polymer containing ethylenic unsaturations, characterized in that it comprises the following steps :

a) reacting, in the presence of a hydrosilylation catalyst, the polymer containing ethylenic unsaturations with a silane compound of the following general formula :

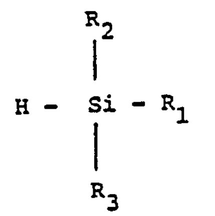

(I)

in which

$R_1$ denotes a hydrocarbon group containing at least one heteroatom carrying mobile electrons

$R_2$ and $R_3$, which may be identical or different, denote a substituted or unsubstituted aliphatic residue, a substituted or unsubstituted organic residue or an $R_1$ group

b) causing the resulting polymer to precipitate, by adding to the reaction medium a compound or mixture of compounds in which the said polymer is insoluble, and

c) separating the precipitated polymer from the reaction medium.

2. Process according to Claim 1, characterized in that the group $R_1$ is a polyether residue of general formula :

$$—R_4—(O—R_5)_n—O—R_6 \qquad (II)$$

in which

$R_4$, $R_5$ and $R_6$ denote substituted or unsubstituted aliphatic residues containing from 1 to 4 carbon atoms

n is an integer from 1 to 20.

3. Process according to Claim 2, characterized in that the abovementioned group $R_1$ is a polyethylene glycol alkyl ether radical of the following formula :

$$R_6—O—(CH_2—CH_2—O)_n—(CH_2)_m— \qquad (III)$$

in which :

$R_6$ denotes a methyl, ethyl or propyl radical

m is an integer equal to 1, 2 or 3

n is an integer from 1 to 20.

4. Process according to one of the preceding claims, characterized in that at least some of the abovementioned ethylenic unsaturations of the polymer are unsaturations of the vinyl type, the ether-

silane groups of general formula (I) being added to at least a proportion of the said unsaturations of the vinyl type.

5. Process according to Claim 4, characterized in that the abovementioned unsaturations of the vinyl type are carried by the carbon atoms forming the polymer chain, while the therminal carbon atoms carry different functional groups.

6. Process according to Claim 5, characterized in that the abovementioned polymer is a polybutadiene containing at least unsaturations of the vinyl type, and end functional groups chosen from the group comprising hydroxyl and carboxyl groups.

7. Process according to one of the preceding claims, characterized in that the abovementioned ether-silane groups are added to all the unsaturations of the vinyl type present in the polymer.

8. Process according to one of Claims 1 to 6, characterized in that the abovementioned ether-silane groups are added to not more than 10 % of the ethylenic bonds present in the polymer chain.

9. Process according to one of the preceding claims, characterized in that it consists in adding a solvent which is common to the polymer and to the abovementioned ether-silane compound in order to perform the abovementioned hydrosilylation step a.

10. Process according to Claim 9, characterized in that the abovementioned common solvent is chosen from the group comprising tetrahydrofuran, benzene, toluene, hexane and carbon tetrachloride.

11. Process according to one of Claims 1 to 8, characterized in that the abovementioned step a is carried out in a heterogeneous medium.

12. Process according to one of the preceding claims, characterized in that the number of moles of ether-silane compound which is added per mole of polymer is equal to the number of unsaturations of the vinyl type present in one mole of polymer, to which it is desired to add the said ether-silane compound, increased by an excess of approximately 10 %.

13. Process according to one of the preceding claims, characterized in that the abovementioned nonsolvent compound employed in step b is chosen from the group comprising methanol, ethanol, acetone and an acetone-methanol mixture.

**Patentansprüche**

1. Verfahren zur Herstellung eines elektrisch leitenden Polymers aus einem Polymer mit ethylenisch ungesättigten Bindungen, gekennzeichnet durch folgende Stufen :

a) Umsetzen des ethylenisch ungesättigte Bindungen enthaltenden Polymers mit einer Silanverbindung der allgemeinen Formel (I) in Gegenwart eines Hydrosilylierungskatalysators :

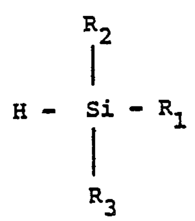

(I)

in der bedeuten :

$R_1$ einen Kohlenwasserstoffrest mit mindestens einem bewegliche Elektronen aufweisenden Heteroatom und

$R_2$, $R_3$ gleich oder verschieden, einen gegebenenfalls substituierten aliphatischen oder organischen Rest oder einen Rest $R_1$ ;

b) Ausfällen des entstandenen Polymers durch Zugabe zum Reaktionsmedium einer Verbindung oder eines Gemisches von Verbindungen, in der (dem) das Polymer unlöslich ist, und

c) Abtrennen des ausgefällten Polymers aus dem Reaktionsmedium.

2. Verfahren nach Anspruch 1, gekennzeichnet durch die Verwendung einer Verbindung der Formel (I), in der $R_1$ ein mehrfach veretherter Rest der allgemeinen Formel (II) ist :

$$-R_4-(O-R_5)_n-O-R_6 \qquad (II)$$

in der $R_4$, $R_5$ und $R_6$ gegebenenfalls substituierte aliphatische Reste mit 1 bis 4 Kohlenstoffatomen bedeuten und

n eine ganze Zahl von 1 bis 20 ist.

3. Verfahren nach Anspruch 2, gekennzeichnet durch Verwendung einer Verbindung der Formel (I), in der $R_1$ ein Polyethylenglycol-alkylether der Formel (III) ist :

$$R_6-O-(CH_2-CH_2-O)_n-(CH_2)_m- \qquad (III)$$

in der

$R_6$ Methyl, Ethyl oder Propyl,

m 1, 2 oder 3

n eine ganze Zahl von 1 bis 20 ist.

4. Verfahren nach einem der vorstehenden Ansprüche, dadurch gekennzeichnet, daß zumindest einige der ehtylenisch ungesättigten Bindungen des Polymers Vinylbindungen sind und der Silanether der Formel (I) mit mindestens einem Teil dieser Vinylbindungen umgesetzt wird.

5. Verfahren nach Anspruch 4, kennzeichnet durch Verwendung eines Polymers mit Vinylbindungen, die sich an den die Kette des Polymers bildenden Kohlenstoffatomen befinden, wobei die endständigen Kohlenstoffatome andere funktionelle Gruppen aufweisen.

6. Verfahren nach Anspruch 5, gekennzeichnet durch Verwendung eines Polybutadiens mit mindestens Vinylbindungen und endständigen funktionellen Gruppen, die unter Hydroxyl- und Carboxylgruppen ausgewählt sind.

7. Verfahren nach einem der vorstehenden Ansprüche, gekennzeichnet durch Umsetzung des Silanethers mit allen im Polymer vorhandenen Vinylbindungen.

8. Verfahren nach einem der Ansprüche 1 bis 6, gekennzeichnet durch Umsetzung des Silanethers mit höchstens 10 % der in der Polymerkette vorhandenen ethylenisch ungesättigten Bindungen.

9. Verfahren nach einem der vorstehenden Ansprüche, gekennzeichnet durch Zugabe eines gemeinsamen Lösungsmittels für das Polymer und den Silanether zur Durchführung der Hydrosilylierungsstufe a).

10. Verfahren nach Anspruch 9, dadurch gekennzeichnet, daß das gemeinsame Lösungsmittel unter Tetrahydrofuran, Benzol, Tuluol, Hexan oder Tetrachlorkohlenstoff gewählt wird.

11. Verfahren nach einem der Ansprüche 1 bis 8, dadurch gekennzeichnet, daß die Stufe a) in einem heterogenen Medium durchgeführt wird.

12. Verfahren nach einem der vorstehenden Ansprüche, dadurch gekennzeichnet, daß die Molzahl des je Mol Polymer zugegebenen Silanethers gleich der in einem Mol Polymer vorhandenen Vinylbindungen, mit denen der Silanether umgesetzt werden soll, plus einem Überschuß von etwa 10 % ist.

13. Verfahren nach einem der vorstehenden Ansprüche, dadurch gekennzeichnet, daß die in Stufe b) verwendete Verbindung oder das verwendete Gemisch unter Methanol, Ethanol, Azeton oder einem Gemisch vom Azeton und Methanol ausgewählt wird.